# EUROPÄISCHE PATENTSCHRIFT

(11) **EP 1 488 204 B1**
(45) Veröffentlichungstag und Bekanntmachung des Hinweises auf die Patenterteilung: **21.12.2005**
(21) Anmeldenummer: 03775251.6
(22) Anmeldetag: 29.10.2003
(51) Int. Cl.: G01L 1/24

(54) **MEHRSCHICHTIGER SENSOR**
MULTI-LAYERED SENSOR
CAPTEUR MULTICOUCHE

(30) Priorität: 29.10.2002 DE 10251085
(43) Veröffentlichungstag der Anmeldung: 22.12.2004
(73) Patentinhaber: Decoma (Germany) GmbH, 66280 Sulzbach (DE)
(72) Erfinder: FLAIG, Joachim, 73257 Köngen (DE); SCHÄFER, Markus, 73635 Rudersberg (DE); HÖHNE, Michael, 73061 Ebersbach (DE); CASTLETON, Christopher, 70190 Stuttgart (DE)
(74) Vertreter: Hössle Kudlek & Partner
(86) Internationale Anmeldenummer: PCT/EP2003/012020
(87) Internationale Veröffentlichungsnummer: WO 2004/040250

(56) Entgegenhaltungen:
- EP-A- 0 539 275
- WO-A-02/46712
- US-A- 5 193 129
- US-A- 5 604 318
- US-A- 5 913 245

## Beschreibung

### Technisches Gebiet

Die Erfindung betrifft einen mehrschichtigen Sensor sowie die Verwendung des mehrschichtigen Sensors als Drucksensor und/oder Kraftsensor bei einem Kraftfahrzeug.

### Hintergrund der Erfindung

Im Rahmen der Einführung neuer Fußgängerschutzbestimmungen sind verschiedene aktive Maßnahmen zur Erfüllung der Vorgaben geplant. Hierzu wird es bei Kraftfahrzeugen in den nächsten Jahren vermehrt zum Einsatz von Kraft- und/oder Drucksensoren kommen, die bei einem Aufprall bzw. Zusammenstoß erkennen, welcher Art der mit dem Fahrzeug zusammengestoßene Gegenstand ist. So kann bspw. unterschieden werden, ob das Fahrzeug mit einem Baum, einem anderen Fahrzeug oder mit einem Fußgänger zusammengestoßen ist. Zur Verwirklichung eines effektiven Fußgängerschutzes kann dann bei Feststellen einer Kollision mit einem Fußgänger entsprechend reagiert werden, das heißt, es werden geeignete Maßnahmen, wie bspw. das Betätigen von Airbags oder die Umformung der Motorhaube, veranlaßt.

Die hierzu eingesetzten Sensoren müssen somit in kürzester Zeit ein Signal liefern, das eine zuverlässige Zuordnung ermöglicht.

Aus der Druckschrift DE 195 34 260 C2 ist ein seilförmiger, faseroptischer Belastungssensor bekannt, bei dem die Belastung auf eine Lichtleitfaseranordnung einwirkt. Die Lichtleitfaseranordnung weist zwei Lichtleitfasern auf, die gemeinsam um eine Kunststoffseele gleichsinnig gewickelt sind.

Aus der Druckschrift US-A-5 913 245 ist ein mehrschichtiger Sensor mit einem durch ihn geführten Lichtwellenleiter bekannt. Das Dokument offenbart des weiteren eine Vorder-, Rück- und Klebeschicht, sowie Rippen zur Anordnung des Lichtwellenleiters.

### Zusammenfassung der Erfindung

Der erfindungsgemäße mehrschichtige Sensor umfasst eine ersten Schicht, durch die ein Lichtwellenleiter geführt ist, wobei der Lichtwellenleiter derart angeordnet ist, dass im Falle einer äußeren Krafteinwirkung diese auf den Lichtwellenleiter einwirkt, eine zweiten Schicht, die an der ersten Schicht anliegt, und eine dritte Schicht, die derart angeordnet ist, dass die erste Schicht zwischen der zweiten Schicht und der dritten Schicht angeordnet ist, dadurch gekennzeichnet, dass an der dritten Schicht Dome angeformt sind, die Schlitze aufweisen, in denen der Lichtwellenleiter geführt ist.

Es kann vorgesehen sein, daß der Lichtwellenleiter durch die äußere Krafteinwirkung gebogen wird oder dass der Lichtwellenleiter unter Änderung seines Querschnitts durch die Krafteinwirkung verformt wird. In beiden Fällen ändert sich die durch den Lichtwellenleiter geführte Lichtmenge, so daß eine Krafteinwirkung, bspw. durch einen Aufprall, erfaßt wird.

In Ausgestaltung des erfindungsgemäßen Sensors weist dieser eine Struktur mit einer Vorderschicht und einer Rückschicht auf, in der der Lichtwellenleiter geführt ist. Bei dieser Ausgestaltung wirken die Schichten, die vorzugsweise aus einem harten aber flexiblen Material gefertigt sind, direkt auf den Lichtwellenleiter ein und bewirken, daß dieser im Falle einer äußeren Krafteinwirkung typischerweise gebogen wird. Als Material für die Schichten bietet sich thermoplastisches Polyurethan oder thermoplastisches Polyesterelastomer an. Diese Materialien zeigen in einem weiten Temperaturbereich nahezu konstante Eigenschaften.

Die Struktur, d.h. die Vorder- und die Rückschicht, können bestimmte weitere Ansätze bzw. Geometrien, bspw. Klips und/oder Rippen aufweisen, die dazu dienen, den Lichtwellenleiter zu halten. Diese bewirken auch, daß das Biegen des Lichtwellenleiters im Falle einer äußeren Krafteinwirkung genau definiert erfolgt. Bei dieser Ausführung ist auch gewährleistet, daß der Sensor flexibel bleibt, ohne daß die Krafteinwirkung die Funktionsfähigkeit beeinträchtigt.

Bei der beschriebenen Ausführungsform ist die Struktur direkt in Kontakt mit dem Lichtwellenleiter, so daß eine auf die Struktur einwirkende äußere Kraft unmittelbar auf den Lichtwellenleiter übertragen wird.

In Ausgestaltung ist zwischen der Vorderschicht und der Rückschicht eine Klebeschicht vorhanden, die die beiden Schichten zusammenhält, wobei diese Klebeschicht vorzugsweise nur im Bereich der Ränder der beiden Schichten aufgetragen ist, so daß der Lichtwellenleiter nicht durch die Klebeschicht beeinträchtigt ist. Die Schicht kann aber auch vollflächig ausgebildet sein. Diese Schicht schützt den Sensor und insbesondere den Lichtwellenleiter auch vor Verschmutzung und Feuchtigkeit.

Zu beachten ist, daß die Materialeigenschaften der Klebeschicht Auswirkung auf das Verhalten des Sensors haben. Durch geeignete Wahl der Materialien sowohl für die Struktur als auch für die Klebeschicht und den Lichtwellenleiter kann das Verhalten des Sensors, d.h. dessen Empfindlichkeit, genau eingestellt werden. Der Grad der relativen Bewegung zwischen den beiden Schichten bei einer spezifischen Krafteinwirkung kann durch Parameter, wie Härte, Breite der Klebeschicht, Anzahl der Klebeschichten usw., eingestellt werden.

Bei einem weiteren Beispiel weist der erfindungsgemäße Sensor eine erste Schicht, durch die ein Lichtwellenleiter geführt ist, und eine zweite Schicht, die an der ersten Schicht anliegt, auf. Dabei hat die erste Schicht eine höhere Kompressibilität als die zweite Schicht.

Die zweite Schicht, die härter als die erste Schicht ist, nimmt somit den durch den Aufprall verursachten Impuls bzw. Druck auf und überträgt diesen weitestgehend ohne Verluste an die erste Schicht. Diese erste weichere Schicht verformt sich und somit auch den in dieser geführten Lichtwellenleiter. Die erste Schicht besteht daher aus einem Material bzw. aus einem Stoff, der dieser eine höhere Kompressibilität verleiht als der in der zweiten Schicht verwendete Stoff. Es kann aber auch vorgesehen sein, daß ein direkter Kontakt zwischen dem Lichtwellenleiter und zumindest einer der äußeren, harten Schichten besteht und somit ein Aufprall ein Verbiegen des Lichtwellenleiters bewirkt.

Durch die mechanische Verformung des Lichtwellenleiters bei einem Aufprall ändert sich folglich die Lichtmenge des durch den Lichtwellenleiter geführten Lichts. Für jeden Aufpralltyp (Fußgänger, Mülltonne, Kleintiere usw.) gibt es ein für den Aufprall spezifisches Signal. Dieses Signal löst dann gegebenenfalls eine nachfolgende aktive Maßnahme aus. Durch den Aufprall ändert sich demzufolge die Lichtmenge und die daraus resultierende Spannung.

Vorzugsweise ist eine dritte Schicht vorgesehen, die eine niedrigere Kompressibilität als die erste Schicht hat und die derart angeordnet ist, daß die erste Schicht zwischen der zweiten und der dritten Schicht angeordnet ist.

Die Schichten sind vorzugsweise aus Kunststoffmaterialien, bspw. aus Polyurethanen (PUR), gefertigt.

Von Vorteil ist es, wenn die Schichten aus biegsamen Materialien gefertigt sind, da in diesem Fall der Sensor durch Biegen an unterschiedlich geformte Oberflächen angepaßt und somit an beliebigen Stellen ohne Beeinträchtigung der Funktionsfähigkeit angebracht werden kann.

In Ausgestaltung des erfindungsgemäßen Sensors ist der Lichtwellenleiter zweifach durch die erste Schicht geführt. Weiterhin vorteilhaft ist es, wenn der Lichtwellenleiter wellenartig bzw. wellenförmig durch die erste Schicht geführt ist.

Vorzugsweise besteht die erste Schicht aus einer Vergußmasse.

Die erfindungsgemäße Verwendung sieht den Einsatz eines vorstehend beschriebenen Sensors als Drucksensor und/oder Kraftsensor bei einem Kraftfahrzeug im Rahmen des Fußgängerschutzes vor.

Weitere Vorteile und Ausgestaltungen der Erfindung ergeben sich aus der Beschreibung und der beiliegenden Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Kurbeschreibung der Erfindung

Die Erfindung ist anhand von Ausführungsbeispielen in der Zeichnung schematisch dargestellt und wird im folgenden unter Bezugnahme auf die Zeichnung ausführlich beschrieben.
- Figur 1: zeigt eine bevorzugte Ausführungsform des erfindungsgemäßen Sensors in einer Seitenansicht.
- Figur 2: zeigt Ausführungsformen einer zweiten und einer dritten Schicht in Draufsicht.
- Figur 3: zeigt vereinfacht eine dritte Schicht mit einem Lichtwellenleiter.
- Figur 4: zeigt in einer Seitenansicht eine weitere Ausführungsform des erfindungsgemäßen Sensors.
- Figur 5: verdeutlicht die Funktionsweise des Sensors aus Figur 4.
- Figur 6: zeigt schematisch und stark vereinfacht einen erfindungsgemäßen Sensor.
- Figur 7: zeigt in Draufsicht einen erfindungsgemäßen Sensor.

### Detaillierte Beschreibung

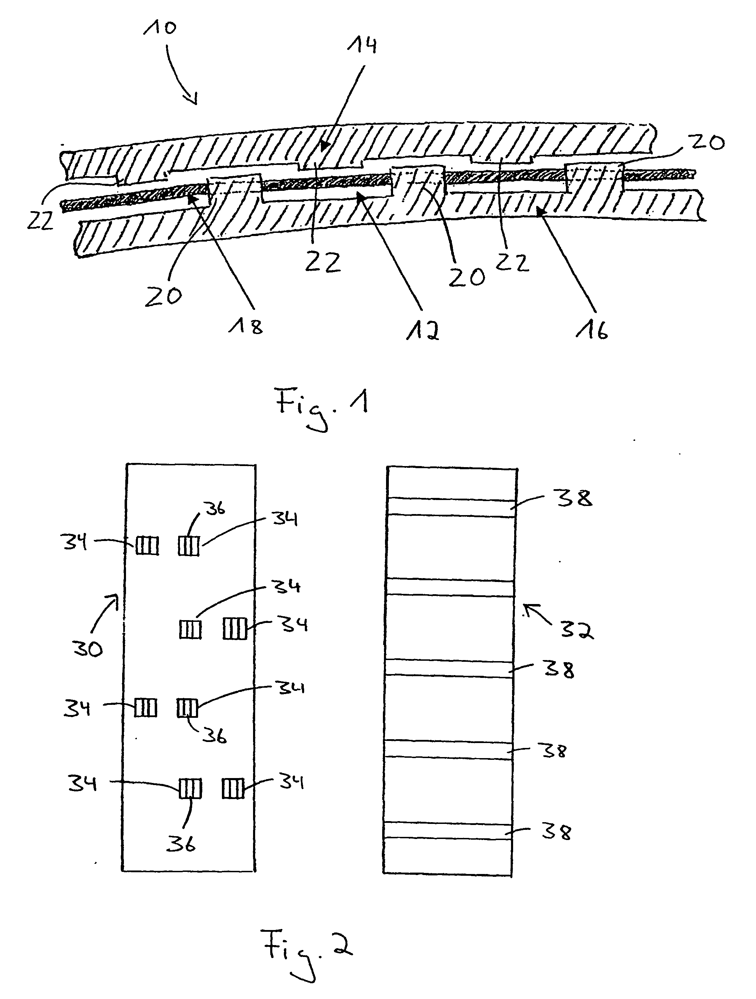

In Figur 1 ist in einer Seitenansicht ein erfindungsgemäßer mehrschichtiger Sensor, insgesamt mit der Bezugsziffer 10 bezeichnet, dargestellt. Dieser Sensor 10 kann bei einem Kraftfahrzeug im Rahmen des Fußgängerschutzes eingesetzt werden.

Zu erkennen ist eine erste Schicht 12, die in diesem Fall aus einer Vergußmasse besteht, eine zweite Schicht 14, die auch als vordere Störstruktur bezeichnet wird, und eine dritte Schicht 16, die als hintere Störstruktur bezeichnet wird.

Durch die erste Schicht 12 ist ein Lichtwellenleiter 18 geführt. Dieser ist dabei mittels Domen 20, die an der dritten Schicht 16 angeformt sind, geführt. An der zweiten Schicht 14 sind Rippen 22 angeformt.

Die zweite Schicht 14 und die dritte Schicht 16 können mittels eines Spritzgußverfahrens hergestellt sein. Wichtig ist, daß diese beiden Schichten 14 und 16 eine niedrigere Kompressibilität aufweisen, als die erste Schicht 12. Im Falle eines Aufpralls wird der ausgeübte Druck über die zweite Schicht 14 bzw. die vordere Störstruktur auf die erste Schicht 12 übertragen, die sich und damit auch den in dieser geführten Lichtwellenleiter verformt.

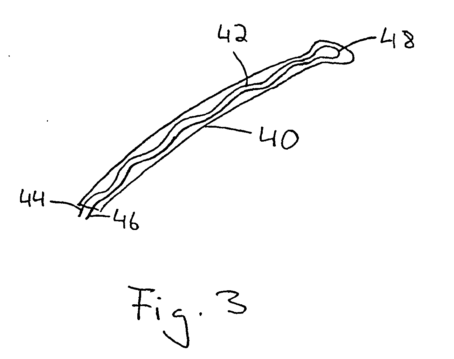

In Figur 2 sind eine zweite Schicht 30 und eine dritte Schicht 32 in Draufsicht wiedergegeben. Bei der dritten Schicht 30, der hinteren Störstruktur, sind angeformte Dome 34 zu erkennen. In diesen Domen sind Schlitze 36 vorgesehen, in denen ein Lichtwellenleiter geführt werden kann.

Zu erkennen ist, daß immer zwei Dome 34 paarweise neben einander angeordnet sind und die Paare jeweils seitlich zueinander versetzt angeordnet sind. Somit kann der Wellenleiter zweifach und wellenartig durch die anliegende erste Schicht geführt werden. Die Dome 34 ragen dabei in die erste Schicht.

Bei der zweiten Schicht 32, der vorderen Störstruktur, sind des weiteren angeformte Rippen 38 zu erkennen.

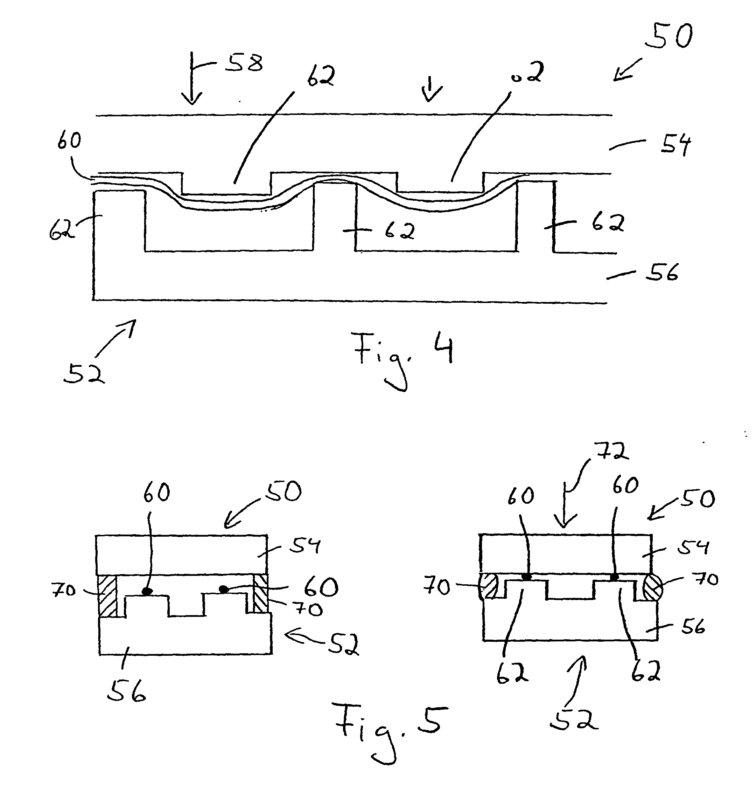

In Figur 3 ist vereinfacht eine dritte Schicht 40 mit einem Lichtwellenleiter 42 dargestellt. Zu erkennen ist, daß der Lichtwellenleiter 42 wellenartig bzw. wellenförmig geführt ist. Ein Lichteintrittsende 44 und ein Lichtaustrittsende 46 sind am selben Ende der dritten Schicht 40 vorgesehen. Am anderen Ende der dritten Schicht 40 bildet der Lichtwellenleiter 42 eine Schleife 48, so daß der Lichtwellenleiter 42 zweifach oberhalb der dritten Schicht 40 und damit in der ersten Schicht geführt ist.

Bei dem erfindungsgemäßen Sensor ist die Aktivierung des Signals unabhängig von Auftreffposition und Auftreffwinkel über die gesamte Sensorbreite. Des weiteren wird die Funktion des Sensors nicht von den herrschenden Temperaturen beeinflußt. Da der Lichtwellenleiter in der ersten Schicht eingebettet ist, ist dieser vor Umwelteinflüssen geschützt. Weiterhin vorteilhaft ist, daß keine korrodierenden Materialien verwendet werden. Von großem Vorteil ist, daß der Sensor für jeden Fahrzeugtyp verwendbar ist.

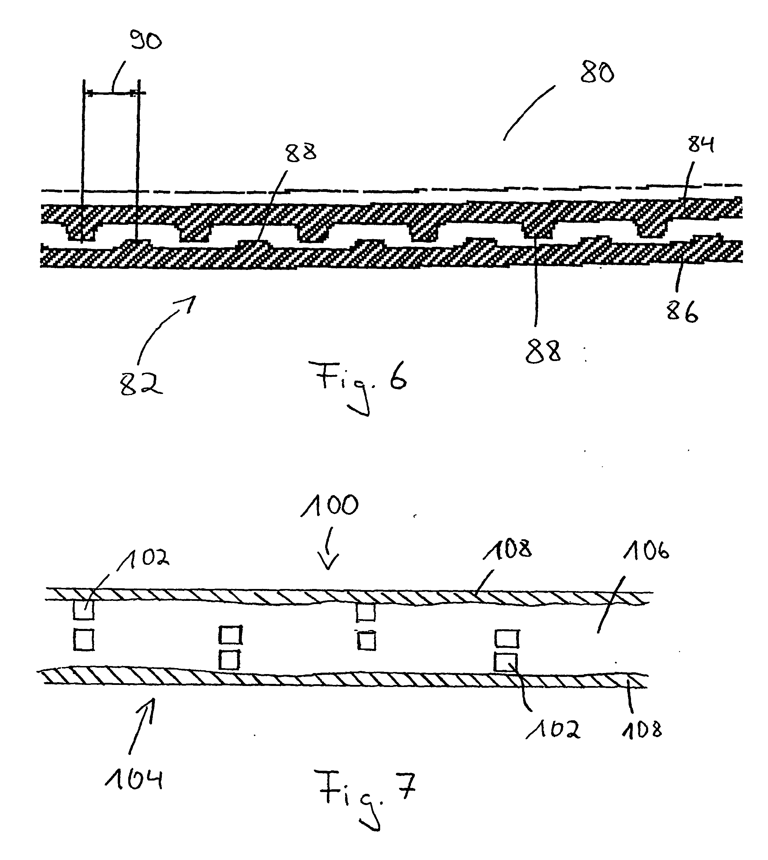

In Figur 4 ist ein weiteres Beispiel des erfindungsgemäßen Sensors, insgesamt mit der Bezugsziffer 50 bezeichnet, dargestellt. Zu erkennen ist eine Struktur 52, die eine Vorderschicht 54 und eine Rückschicht 56 aufweist. Pfeile 58 verdeutlichen eine mögliche Druck- bzw. Krafteinwirkung durch einen Aufprall.

In der Struktur 52, nämlich zwischen der Vorderschicht 54 und der Rückschicht 56, ist ein Lichtwellenleiter 60 geführt. Die beiden Schichten 54 und 56 tragen Rippen 62, die so aufeinander abgestimmt sind, daß der Lichtwellenleiter 60 im Falle eines Aufpralls und einer dadurch verursachten Relativbewegung zwischen den beiden Schichten 54 und 56 gebogen wird. Diese Biegung verursacht eine Änderung der durch den Lichtwellenleiter 60 pro Zeiteinheit transportierten Lichtmenge.

Figur 5 verdeutlicht die Funktionsweise des Sensors 50. In dieser Darstellung ist außerdem eine Klebeschicht bzw. Kleberaupe 70 zu erkennen, die die beiden Schichten 54 und 56 miteinander verbindet und den in der Struktur 52 geführten Lichtwellenleiter 60 vor Umwelteinflüssen schützt.

Zu erkennen ist, wie sich die Kleberaupe 70 in der linken Darstellung infolge einer Krafteinwirkung (Pfeil 72) verformt und auf diese Weise eine relative Bewegungen zwischen den beiden Schichten 54 und 56 ermöglicht. Da zumindest eine der Schichten, ggf. bereits vor dem Aufprall, in direktem Kontakt mit dem Lichtwellenleiter 60 steht, wird dieser gebogen. Es ist also möglich, daß der direkte Kontakt zwischen der Struktur 52 und dem Lichtwellenleiter 60 bereits vor einem Aufprall besteht, oder daß dieser Kontakt durch die vorstehend beschriebene Relativbewegung zustande kommt. In jedem Fall wird, unterstützt durch die Form der Struktur und die Gestaltung der angeformten Rippen, ein Biegen des Lichtwellenleiters bewirkt.

In Figur 6 ist ein weiteres Beispiel des erfindungsgemäßen Sensors, insgesamt mit der Bezugsziffer 80 bezeichnet, wiedergegeben.

Wiederum zu erkennen ist eine Struktur 82, die eine Vorderschicht 84 und eine Rückschicht 86 umfaßt. Zwischen diesen Schichten 84 und 86 verläuft ein (nicht dargestellter) Lichtwellenleiter. Deutlich zu erkennen ist die korrespondierende Anordnung von Rippen 88 an den Schichten 84 und 86. Der Abstand zwischen zwei Rippen beträgt vorzugsweise etwa 8,5 mm (Pfeil 90).

In Figur 7 ist ein erfindungsgemäßer Sensor 100 in Draufsicht dargestellt. Zu erkennen sind Klips 102, die immer paarweise angeordnet eine wellenartige Führung des Lichtwellenleiters ermöglichen. Diese Klips 102 sichern den festen Halt des Lichtwellenleiters in dem Sensor 100.

Der Sensor hat eine Struktur 104, von der in dieser Darstellung nur eine Vorderschicht 106 zu erkennen ist. Im Bereich der Ränder der Vorderschicht 106 ist eine Klebeschicht 108 aufgetragen, die die Vorderschicht 106 mit der darunter angeordneten, in dieser Darstellung nicht zu erkennenden Rückschicht verbindet. Diese Klebeschicht 108 schützt den Sensor 100 bzw. den darin geführten Lichtwellenleiter vor äußeren Einflüssen. Das Material der Klebeschicht und die Breite der Schicht hat Einfluß auf die relative Beweglichkeit der beiden Schichten zueinander und folglich auf die Empfindlichkeit des Sensors.

## Patentansprüche

1. Mehrschichtiger Sensor mit einer ersten Schicht (12), durch die ein Lichtwellenleiter (18, 42) geführt ist, wobei der Lichtwellenleiter (18, 42, 60) derart angeordnet ist, dass im Falle einer äußeren Krafteinwirkung diese auf den Lichtwellenleiter (18, 42, 60) einwirkt, einer zweiten Schicht (14, 32), die an der ersten Schicht (18, 42) anliegt, und einer dritten Schicht, die derart angeordnet ist, dass die erste Schicht (12) zwischen der zweiten Schicht (14, 32) und der dritten Schicht (16, 30, 40) angeordnet ist, **dadurch gekennzeichnet, dass**
an der dritten Schicht Dome (34) angeformt sind, die Schlitze (36) aufweisen, in denen der Lichtwellenleiter (18, 42) geführt ist.

2. Mehrschichtiger Sensor nach Anspruch 1, bei dem der Lichtwellenleiter (18,42, 60) derart angeordnet ist, dass dieser durch die äußere Krafteinwirkung gebogen wird.

3. Mehrschichtiger Sensor nach Anspruch 1, bei dem der Lichtwellenleiter (18,42, 60) derart angeordnet ist, dass dieser durch die äußere Krafteinwirkung verformt wird.

4. Mehrschichtiger Sensor nach einem der Ansprüche 1 bis 3 mit einer Struktur (52, 82, 104), in der der Lichtwellenleiter (18, 42, 60) geführt ist, wobei die Struktur (52, 82,104) aus einer Vorderschicht (54, 84, 106) und einer Rückschicht (56, 86) besteht, die die äußere Krafteinwirkung direkt auf den Lichtwellenleiter (18, 42, 60) übertragen.

5. Mehrschichtiger Sensor nach Anspruch 4, bei dem die Struktur Klips (34, 102) und Rippen (38, 62, 88) aufweist, die zur Führung des Lichtwellenleiters (18, 42, 60) dienen.

6. Mehrschichtiger Sensor nach Anspruch 4 oder 5, bei dem die Vorder- und die Rückschicht (54, 56, 84, 86, 106) über eine Klebeschicht (70, 108) miteinander verbunden sind.

7. Mehrschichtiger Sensor nach Anspruch 6, bei dem die Klebeschicht(70, 108) nur im Bereich der Ränder der Vorder- und der Rückschicht (54, 56, 84, 86, 106) aufgetragen ist.

8. Mehrschichtiger Sensor nach Anspruch 1, bei dem erste Schicht (12) eine höhere Kompressibilität als die zweite Schicht (14, 32) aufweist.

9. Mehrschichtiger Sensor nach Anspruch 8, bei dem die dritte Schicht (16, 30, 40) eine niedrigere Kompressibilität als die erste Schicht (12) hat.

10. Mehrschichtiger Sensor nach einem der Ansprüche 1 bis 9, bei dem der Lichtwellenleiter (18, 42, 60) mindestens zweifach durch den Sensor (10, 50, 80, 100) durchgeführt ist.

11. Mehrschichtiger Sensor nach einem der Ansprüche 1 bis 10, bei dem der Lichtwellenleiter (18, 42, 60) wellenartig durch den Sensor geführt ist.

## Claims

1. Multi-layered sensor with a first layer (12), through which an optical waveguide (18, 42) is guided, the optical waveguide (18, 42, 60) being arranged in such a way that, in the case of exposure to the action of an external force, this force acts on the optical waveguide (18, 42, 60), a second layer (14, 32), which lies against the first layer (18, 42), and a third layer, which is arranged in such a way that the first layer (12) is arranged between the second layer (14, 32) and the third layer (16, 30, 40), **characterized in that**
formed on the third layer are bosses or domes (34), which have slits (36) in which the optical waveguide (18, 42) is guided.

2. Multi-layered sensor according to Claim 1, in which the optical waveguide (18, 42, 60) is arranged in such a way that it is bent by the action of an external force.

3. Multi-layered sensor according to claim 1, in which the optical waveguide (18, 42, 60) is arranged in such a way that it is deformed by the action of an external force.

4. Multi-layered sensor according to one of claims 1 to 3, with a structure (52, 82, 104) in which the optical waveguide (18, 42, 60) is guided, the structure (52, 82, 104) comprising a front layer (54, 84, 106) and a rear layer (56, 86), which transfer the action of an external force directly to the optical waveguide (18, 42, 60).

5. Multi-layered sensor according to claim 4, in which the structure has clips (34, 102) and ribs (38, 62, 88), which serve for the guidance of the optical waveguide (18, 42, 60).

6. Multi-layered sensor according to claim 4 or 5, in which the front and rear layers (54, 56, 84, 86, 106) are connected to each other by means of an adhesive layer (70, 108).

7. Multi-layered sensor according to claim 6, in which the adhesive layer (70, 108) is applied only in the region of the edges of the front and rear layers (54, 56, 84, 86, 106).

8. Multi-layered sensor according to claim 1, in which the first layer (12) has a higher compressibility than the second layer (14, 32).

9. Multi-layered sensor according to claim 8, in which the third layer (16, 30, 40) has a lower compressibility than the first layer (12).

10. Multi-layered sensor according to one of claims 1 to 9, in which the optical waveguide (18, 42, 60) is guided at least twice through the sensor (10, 50, 80, 100).

11. Multi-layered sensor according to one of claims 1 to 10, in which the optical waveguide (18, 42, 60) is guided in an undulating manner through the sensor.

## Revendications

1. Capteur multicouches comportant une première couche (12) à travers laquelle est mené un guide d'ondes lumineuses (18, 42), le guide d'ondes lumineuses (18, 42, 60) étant agencé de telle sorte qu'en cas d'action d'une force extérieure, celle-ci agit sur le guide d'ondes lumineuses (18, 42, 60), une seconde couche (14, 32) qui s'appuie contre la première couche (18, 42) et une troisième couche qui est agencée de telle sorte que la première couche (12) est agencée entre la seconde couche (14, 32) et la troisième couche (16, 30, 40), **caractérisé en ce que**
des coupoles (34) sont conformées sur la troisième couche, qui comprennent des fentes (36) dans lesquelles est mené le guide d'ondes lumineuses (18, 42).

2. Capteur multicouches selon la revendication 1, dans lequel le guide d'ondes lumineuses (18, 42, 60) est agencé de manière à être cintré par l'action de la force extérieure.

3. Capteur multicouches selon la revendication 1, dans lequel le guide d'ondes lumineuses (18, 42, 60) est agencé de manière à être déformé par l'action de la force extérieure.

4. Capteur multicouches selon l'une des revendications 1 à 3, comportant une structure (52, 82, 104) dans laquelle est mené le guide d'ondes lumineuses (18, 42, 60), la structure (52, 82, 104) étant constituée par une couche antérieure (54, 84, 106) et par une couche postérieure (56, 86) qui transmettent l'action de la force extérieure directement au guide d'ondes lumineuses (18, 42, 60).

5. Capteur multicouches selon la revendication 4, dans lequel la structure comprend des clips (34, 102) et des nervures (38, 62, 88) qui servent à mener le guide d'ondes lumineuses (18, 42, 60).

6. Capteur multicouches selon l'une ou l'autre des revendications 4 et 5, dans lequel la couche antérieure et la couche postérieure (54, 56, 84, 86, 106) sont reliées l'une à l'autre via une couche collante (70, 108).

7. Capteur multicouches selon la revendication 6, dans lequel la couche collante (70, 108) n'est appliquée que dans la zone des bordures de la couche antérieure et de la couche postérieure (54, 56, 84, 86, 106).

8. Capteur multicouches selon la revendication 1, dans lequel la première couche (12) présente une compressibilité supérieure à celle de la seconde couche (14, 32).

9. Capteur multicouches selon la revendication 8, dans lequel la troisième couche (16, 30, 40) présente une compressibilité inférieure à celle de la première couche (12).

10. Capteur multicouches selon l'une des revendications 1 à 9, dans lequel le guide d'ondes lumineuses (18, 42, 60) est mené au moins deux fois à travers le capteur (10, 50, 80, 100).

11. Capteur multicouches selon l'une des revendications 1 à 10, dans lequel le guide d'ondes lumineuses (18, 42, 60) est mené de manière ondulée à travers le capteur.
